# EUROPEAN PATENT APPLICATION

(11) **EP 4 786 380 A1**
(43) Date of publication of application: **05.08.2026**
(21) Application number: 25155277.4
(22) Date of filing: 31.01.2025
(51) Int. Cl.: B65G 17/00, B65G 35/06, B65G 47/53, B65G 65/00, B65G 47/29

(54) **CONVEYOR SYSTEM HAVING PAIR OF TRANSPORT BELTS**

(71) Applicant: Liber Unternehmensberatung GmbH, 63512 Hainburg (DE)
(72) Inventor: Kreimeyer, Ulrich, 63512 Hainburg (DE)
(74) Representative: Eisenführ Speiser

(57) **Abstract**

The invention relates to a conveyor system (1) comprising a product carrier (11) including at least one puck (25), at least one loading station (3), at least one unloading station (5), at least one transport conveyor, wherein the loading station (3) comprises an infeed (17) configured to receive products (P) and to deliver the products (P) to a loading position (15) of the loading station (3), a loading conveyor (27) configured to transport the product carrier (11) stepwise in a transport direction (T) through the loading station (3) and to successively align compartments (13) of the product carrier (11) with the loading position (15), wherein the loading conveyor (27) comprises a pair of primary transport belts (47), and wherein the primary transport belts (47) are configured to clamp the at least one puck (25) of the product carrier (11) for conveying the product carrier (11) in the transport direction (T).

## Description

The invention relates to a conveyor system comprising at least one product carrier including at least one puck and a product holder, the product holder having a plurality of compartments, at least one loading station for loading products to the product carrier, at least one unloading station for unloading products from the product carrier, at least one transport conveyor configured to transport the product carrier at least along a section of a transport path between the loading station and the unloading station and/or of a return path between the unloading station and the loading station.

In production processes, conveyor systems are used to convey products between different production machines and/or handling machines. After production, products are packaged and prepared for shipping. In particular in the production of bar-shaped products, such as candy bars and/or medical/pharmaceutical products, conveyor systems are often used for handling products. Conveyor systems are also used to gather batches of products, which are then packaged together in a secondary packaging.

For example, candy bars are produced and then provided with a first primary packaging in a so-called flow wrapper. Multiple candy bars in their respective primary packaging are then grouped together (batched) and provided with a secondary packaging, such as a display or the like. A conveyor system is provided between the packaging machines providing the primary packaging and the secondary packaging. The conveyor system receives products from the primary packaging machine at the loading station, groups multiple products together and delivers the batch of products to the unloading station. Grouping of products can be achieved by providing a predefined number of products to a product carrier having multiple compartments or the like. The compartments are individually filled with a product by moving the product carrier past an infeed.

In many industries, products, in particular bar-shaped products in the food or medical industry, are often produced in high numbers. To handle large amounts of products, very cost-intensive packaging systems that offer little flexibility in terms of layout planning, production logistics and the like are used. This is particularly the case in the high-performance sector, where the number of products to be handled per minute are high.

In typical high performance conveyor systems, where high speed is required, so-called racetrack systems are used. A racetrack system comprises two conveyor belts. Each belt is provided with a number of fixed compartments, adapted to the number and size of products that are to be conveyed. At a loading station, the racetrack will collect products that may arrive individually on a single conveyor. Each product is then loaded in one of the compartments. After a product has been loaded in a compartment, the belt advances to the next compartment such that a new product can be loaded. When all compartments are filled with a product, the belt advances to the unloading station where the batch of products is unloaded, for example to a display holding several products. At the same time, the empty compartments of the other belt are positioned at the loading station and filled with products one after another. Such a racetrack system is well suited when products of one type have to be grouped in batches. Racetrack systems with fixed product compartments are well adapted for large scale production. However, since the compartments are fixed on the conveyor belts, this solution is inflexible, and adapting the compartments to different product numbers or product sizes is only possible with great efforts.

In markets characterized by increasing individualization and high dynamics, high-performance packaging systems that are also particularly flexible would be advantageous. However, a central weakness currently exists in the lack of flexibility of the systems and/or in a lack of performance. Rigidly linked systems such as racetrack systems require specific arrangements of machines. Moreover, since racetrack system rigidly link a primary and a secondary packaging machine, both packaging machines must be operated the entire time even if one of the packaging machines could process the tasks in less time (due to higher machine capacity).

Another central weakness of rigidly coupled packaging systems with primary and secondary packaging machines for bar-shaped articles lies in the lack of flexibility in terms of package contents or batch contents respectively. This applies both to the number of articles per secondary packaging and to the types (e.g. flavours) in a secondary packaging. Packs of mixed products could play an increasingly important role in the product range of many companies. However, with the existing, rigidly coupled primary and secondary packaging systems, such mix packs cannot be implemented at all or only at considerable time and financial expense. Changing the product format often requires a complete retrofit of the system, which may interrupt production for several hours or even days. To reduce the impact, retrofits are often performed on weekends which leads to additional personnel costs. Furthermore, the efficiency and availability of existing plants suffers because adjustments, even for minor changes, are time-consuming and prone to error. These structural deficits hinder competitiveness and make it difficult to react quickly to new market requirements.

There is thus room for an improved conveyor system, in particular high performance conveyor system for flexibly linking a primary packaging system and a secondary packaging system.

WO 2021/246948 A1 discloses a conveyor system comprising at least one endless chain conveyor and at least one pallet, where the conveyor system comprises a first loading station and an unloading station, where the first loading station is provided with a first infeed conveyor having a delivery position, where the first loading station comprises a magnet conveyor comprising a linear motor, and where the pallet comprises a magnetic material such that it can be driven by the magnet conveyor at the first loading station. This conveyor systems allows a decoupling of the endless chain conveyor and the loading station. However, there is still room for improvement. The magnet conveyor requires the pallet to comprise magnetic material. The pallets of the disclosed system are therefore relatively heavy. This, however, limits the cycle rate that can be achieved, since very high forces are required to accelerate and to decelerate heavy magnetic pallets. Furthermore, for a magnet conveyor, a huge control effort is required in order to correctly position the pallets with the infeed conveyor. This increases the overall cost of the disclosed system and increases the chance for errors. The possibility to change product sizes and or product numbers is still not optimal, since magnetic pallets come at a relatively high cost.

Therefore, it is an object of the invention to provide an improved conveyor system, in particular a conveyor system having higher availability, reduced manufacturing and/or operating cost, higher flexibility and/or higher cycle rates.

The invention solves this problem with a conveyor system as defined in independent claim 1. In particular, the invention solves the problem with a conveyor system comprising at least one product carrier including at least one puck and a product holder, the product holder having a plurality of compartments; at least one loading station for loading products to the product carrier; at least one unloading station for unloading products from the product carrier; at least one transport conveyor configured to transport the product carrier at least along a section of a transport path between the loading station and the unloading station and/or of a return path between the unloading station and the loading station; wherein the loading station comprises an infeed configured to receive products and to deliver the products to a loading position of the loading station, a loading conveyor configured to transport the product carrier stepwise in a transport direction through the loading station and to align the compartments of the product carrier with the loading position, preferably to successively align compartments of the product carrier with the loading position; wherein the loading conveyor comprises a pair of primary transport belts defining a transport gap between each other; and wherein the primary transport belts are configured to clamp the at least one puck of the product carrier in the transport gap for conveying the product carrier in the transport direction.

The product carrier comprises at least one puck, which may also be referred to as pallet. Preferably, the conveyor system comprises a plurality of product carriers, each having at least one puck. The puck may have the same shape for each product carrier.

The invention is based on the idea that product carriers having at least one puck can be conveyed efficiently by a transport conveyor and precisely by a pair of primary transport belts. For transport through the loading station or at least a portion thereof, the puck of the product carrier is clamped between the primary transport belts of the loading conveyor (i.e. in the transport gap formed between the primary transport belts). The loading conveyor is configured to align the compartments of the product holder arranged on the at least one puck with the loading position. The loading position is the position to which the infeed provides the products. A compartment of the product holder aligned with the loading position can thus receive a product from the infeed. The loading conveyor can move the product carrier in a stepwise manner. In particular, the loading conveyor can be configured to move the product carrier such that a first compartment is moved to and stopped at the loading position, and to then move the product carrier such that a second compartment is moved to and stopped at the loading position once the first compartment has been filled with a product.

The loading conveyor comprises a pair of primary transport belts that define a transport gap. The primary transport belts extend at least partially along a transport direction. The transport direction is the direction along which the product carriers are moved through the loading station. The transport direction is preferably straight. Transverse to the transport direction, the primary transport belts are spaced apart from each other. The space between the spaced apart primary transport belts is the transport gap. A puck of a product carrier can be clamped between the primary transport belts (i.e. in the transport gap). A width of the puck may substantially correspond to the width of the transport gap. The width of the transport gap can also be smaller than a corresponding dimension of the puck in some embodiments. The belts can be flexible. Upon movement of the primary transport belts, the puck is conveyed in the transport direction due to friction between the transport belt and the primary transport belts. Alternatively or additionally to a friction fit between the primary transport belts and the puck of the product carrier, a form fit may be provided. For example, the primary transport belts could be formed as toothed belts that engage a corresponding engagement surface of the puck. Preferably, the primary belts are smooth belts. Smooth belts provide very high flexibility. For example, multiple pucks can be clamped at the same time without the need to account for the spacing between the pucks.

During transport along the transport path and/or the return path, the puck of the product carrier can rest on the transport conveyor. The transport conveyor can be any type of conveyor, such as a roller conveyor or belt conveyor. Preferably, the transport conveyor is a chain conveyor, particularly preferred an endless chain conveyor. The transport conveyor enables a flexible overall layout of the conveyor system as it can be provided with curves. With the transport conveyor the product carrier can be forwarded to the loading station and/or transported away from the loading station in a continuous flow.

On the transport path, at least partially filled product carriers are moved towards the unloading station. The inventive conveyor may comprise more than one loading station. In this case, the transport path may extend between at least two of the plurality of loading stations.

The return path connects the unloading station with the first loading station for providing empty product carriers. The conveyor system may further comprise a buffer area for buffering at least partially filled product carriers and/or empty product carriers. This allows individual operation of machines upstream and downstream of the conveyor system.

The infeed is configured to provide products to the loading position or to a compartment aligned with the loading position respectively. Preferably, the infeed comprises at least one infeed belt. Products, received from an external source can be conveyed to the loading position by the infeed belt.

The inventive conveyor system can provide multiple advantages. It provides high flexibility as the system can be easily adapted to different plant layouts, different product compositions, product mixes, different product sizes and/or different batch sizes. A time required for such adaptations is reduced which may lead to reduced overall cost. Moreover, the decoupling of the transport conveyor and the loading station allows products to be buffered, which increases availability of the system.

According to a first preferred embodiment, the primary transport belts extend parallel to each other along the transport direction and are configured to clamp the at least one puck laterally. The lateral orientation is defined in relation to the transport direction.

Preferably, the loading station further comprises a supply conveyor. The supply conveyor is configured to provide the product carrier to the loading conveyor. It can be configured to receive a product carrier from the transport conveyor. A supply conveyor can ensure that product carriers are provided to the loading conveyor at the right time. Preferably, the supply conveyor is configured to provide multiple product carriers to the loading conveyor such that the loading conveyors about each other in the transport direction, preferably abut each other when clamped in the transport gap of the loading conveyor.

According to a preferred configuration, the supply conveyor comprises a pair of secondary transport belts defining a secondary transport gap between each other. The secondary transport belts are preferably configured to clamp the at least one product carrier in the secondary transport gap for conveying the product carrier in the transport direction. The secondary transport belts can be configured substantially identical to the primary transport belts. For example, the primary and secondary transport belts can have similar dimensions and/or can be made from similar materials. The secondary transport belts can also a greater or shorter length than the primary transport belts. Preferably, the secondary transport gap is wider than the primary transport gap. However, it is also preferred that the secondary transport gap has substantially the same width as the transport gap between the primary transport belts. In a particularly preferred configuration, the secondary transport belts are configured to clamp at least one puck of the product carrier. Additionally or alternatively, the secondary transport belts can be configured to clamp the product holder of the product carrier for transporting the product carrier in the transport direction.

Preferably, the secondary transport belts at least partially overlap the primary transport belts in the transport direction. An overlap of the primary transport belts and the secondary transport belts can facilitate a transition of product carriers from the supply conveyor to the loading conveyor. Gaps between product carriers can be prevented and filing rates that can be achieved by the loading station can be increased.

According to a preferred embodiment, the secondary transport belts are arranged on a product holder side of the primary transport belts in a height direction transverse to the transport direction. The height direction is defined transverse to the transport direction and preferably transverse to the width of the transport gap. The height direction is preferably parallel to a central axis of the product holder extending through the puck and the product holder. The product holder side of the primary transport belts is the side of the primary transport belts facing towards the product holder of the product carrier when the product carrier is received at the loading station.

Preferably, the supply conveyor can be configured to lift a product carrier off of the transport conveyor. For example, the supply conveyor could be angled with respect to a transport surface of the transport conveyor.

In a preferred configuration of the conveyor system, the transport conveyor extends through the loading station and/or the unloading station. Preferably, the transport conveyor extends on a puck side of the primary transport belts facing away from the product holder of the product carrier. Flexibility of the conveyor system can be increased, if the loading station is configured such that the transport conveyor extends there through, as a position of the loading station with respect to the transport conveyor may be varied. For example, the loading station can be moved along the transport path to adapt the overall configuration of the conveyor system to changing requirements.

The primary transport belts preferably have at least one servo motor. Servo motors allow quick movements and precise stops at high speeds. Therefore, servo motors are particularly suited for high performance applications. Preferably, each primary transport belt comprises a servo motor.

In preferred embodiments, the at least one puck has at least one flat clamping surface. Particularly preferred, the puck has two parallel flat clamping surfaces. Such clamping surfaces can be clamped by the pair of primary transport belts and/or secondary transport belts. Flat surfaces increase the clamped surface area and prevent relative motion of the puck and the primary transport belts or secondary transport belts respectively. Moreover, flat clamping surfaces can prevent rotation of the puck. Alternatively, the puck can have a cylindrical clamping surface. Other configurations of the puck are also possible. For example, the puck could have a hexagonal shape, an oval shape, a star shape, a dovetail shape or the like.

Preferably, the at least one puck is at least partially formed by a sandwich construction having an inner honeycomb structure. A sandwich construction is light and therefore allows a low overall weight of the product carrier. Forces required for accelerating and decelerating the product carrier are reduced. This can increase a filling rate at which products can be filled into the compartments of the product holder. The honeycomb structure provides structural strength, while at least one outer top layer prevents accumulation of dirt in the honeycomb structure. Preferably, the (empty) product carrier has a mass of less than 1 kg, preferably less than 900 g, preferably less than 800 g, preferably less than 700 g, preferably less than 600 g, preferably less than 500g. It shall be understood that the puck being formed by a sandwich construction is only one way of achieving a product carrier having a low mass (weight). For example, additionally or alternatively, at least a portion of the product carrier can be formed from a plastic material and/or a composite material. Preferably, the product carrier comprises no metal.

According to a preferred configuration, the product holder is releasably coupled to the at least one puck. Particularly preferred, the product carrier comprises a quick release mechanism. The quick release mechanism can fix the product holder to the puck. A releasable coupling of the product holder to the at least one puck facilitates adaptation of the conveyor system to different product sizes, product forms, batch sizes and/or product mixtures. If necessary, the product holder can be removed from the puck. The pucks can be reused with a different product holder adapted to new requirements. For example, a product holder having five compartments can be exchanged with a product holder having seven compartments when the batch size of products is increased from five products to seven products. Reusing the pucks facilitates adaptation of the conveyor system and increases flexibility. In some cases different product holders may be usable without the need to adapt the loading station and/or control of components of the loading station. Preferably, at least a portion of the product carrier is made from a biodegradable material. Particularly preferred, the puck and/or the product holder is at least partially made from a biodegradable material. The puck and/or the product holder and/or the product carrier is preferably formed by additive manufacturing. Additive manufacturing allows lightweight but stable constructions. For example, a hollow puck having a closed surface could be formed. Moreover, the surface structure achievable by additive manufacturing can enhance friction between the puck and the primary transport belts. Preferred additive manufacturing methods are 3D printing, selective laser sintering, binder jetting, powder bed fusion, directed energy disposition, material jetting, sheet lamination and/or material extrusion.

Preferably, the product carrier is at least partially made from a plastic material. Particularly preferred, the puck and/or the product holder is made from a plastic material.

In a preferred further development, the infeed comprises at least two infeed belts. The infeed belts are preferably arranged in series in an infeed direction. Each of the two infeed belts is individually drivable or independently drivable respectively. For example and preferably, each infeed belt can comprise an infeed drive such that the infeed belts can be driven independently from each other. In a particularly preferred configuration, the infeed comprises three infeed belts. Providing multiple infeed belts allows to better control a supply of products to the loading position or a compartment of a product holder aligned with the loading position respectively. For example, an infeed belt adjacent to the loading position can be used to supply products to the loading position while a second infeed belt upstream of this infeed belt in the infeed direction buffers products. The infeed can form an interface from the conveyor system to an upstream supply of products such as a primary packaging machine. The infeed direction is the direction, in which products travel from this interface towards the loading position.

According to a preferred further development, the conveyor system comprises an infeed controller, wherein the infeed controller is configured to control at least two of the infeed belts such that a continuous line of products is formed on a supply infeed belt and such that a loading infeed belt arranged between the supply infeed belt and the loading position individually conveys products to a compartment of the product holder aligned with the loading position. A continuous line of products is a line of products extending along the infeed direction. The products of the line of products are arranged next to each other with a gap in the infeed direction of 20 mm or less, preferably 15 mm or less, preferably 10 mm or less, preferably 5 mm or less. The supply infeed belt is provided upstream of the loading infeed belt in the infeed direction. The loading infeed belt lies next to the loading position or a compartment of a product holder aligned with the loading position respectively. The loading infeed belt transfers the product to the respective compartment aligned with the loading position. In high performance conveyor systems, the loading infeed belt is drivable at high speeds an can "shoot" products into the compartments of the product holder. The supply infeed belt supplies products to the loading infeed belt. By controlling the infeed belts such that a continuous line of products is formed on the supply infeed belt, it may be ensured that a product is available to the loading infeed belt when necessary. Moreover, loading rates may be increased since the products are provided with no gaps or almost no gaps.

Preferably, the product carrier comprises at least two pucks spaced apart from each other in the transport direction. Two spaced apart pucks can increase stability of the product carrier. Furthermore, if both pucks are clamped by the loading conveyor, the spacing in the transport direction can help to prevent unintentional rotation of the product carrier in the loading station. Preferably, at least two pucks have the same shape. In other embodiments, at least two of the pucks can have different shapes. For example, a first puck can be adapted to the loading conveyor (i.e. to be clamped by the loading conveyor) while a second puck of the product carrier is adapted to the supply conveyor (i.e. to be clamped by the supply conveyor).

The conveyor system preferably comprises a controller that is configured to control movement of the infeed, the loading conveyor, the transport conveyor and/or other components of the conveyor system. The conveyor system may comprise one or more sensors, in particular light barriers or the like. The controller may be configured to automatically control the conveyor system or components thereof based on sensor data (or sensor signals) provided by the sensors. For example, the controller can control the loading conveyor such that an empty compartment of the product holder is aligned with the loading position once a sensor of the conveyor system indicates that a previous compartment of the product holder has received a product.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying drawings:
- Fig. 1: shows a top view of an exemplary embodiment of a conveyor system,
- Fig. 2: shows an exemplary embodiment of a product carrier of the conveyor system,
- Fig. 3: shows a cut view through the product carrier of Fig. 2, and
- Fig. 4: shows a perspective view of a loading station of the conveyor system.

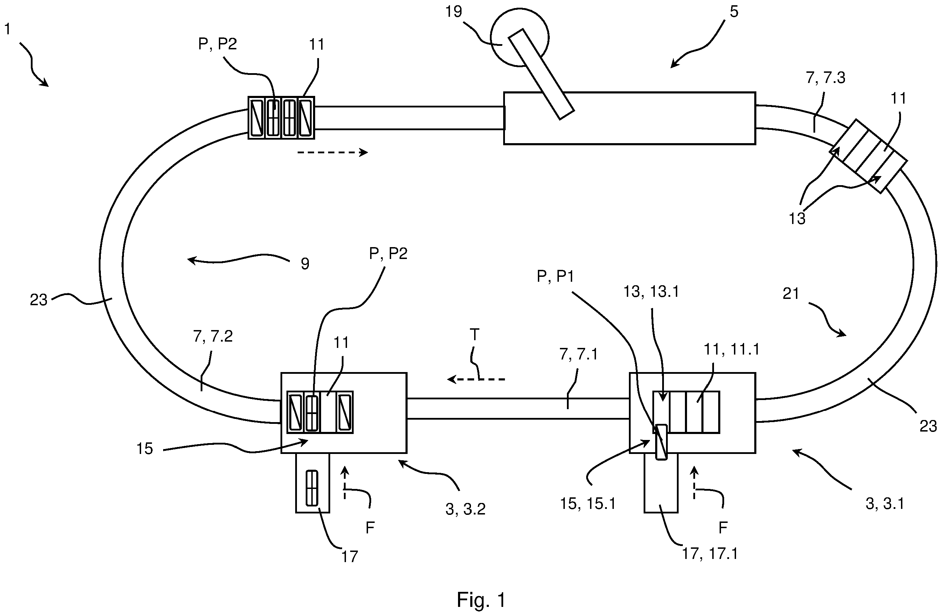

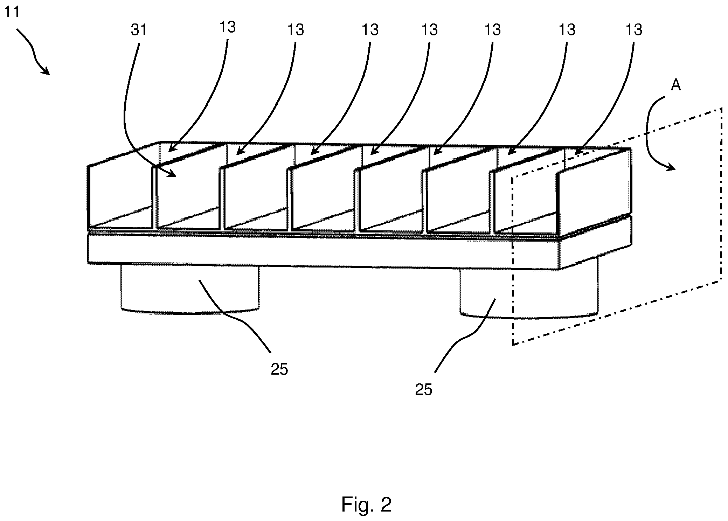

Fig. 1 shows a top view of a conveyor system 1. For illustrative purposes, the components of the conveyor system 1 are shown in abstract form. Figs. 2 to 4 show more detail of the components of the conveyor system 1.

The conveyor system 1 comprises two loading stations 3, an unloading station 5 and three transport conveyors 7. A transport path 9 between the loading stations 3 and the unloading station 5 is formed by a first transport conveyor 7.1 and a second transport conveyor 7.2. The first transport conveyor 7.1 connects a first loading station 3.1 and a second loading station 3.2. The second transport conveyor 7.2 connects the second loading station 3.2 to the unloading station 5. Both, the first transport conveyor 7.1 and the second transport conveyor 7.2 define the transport path 9 between the loading stations 3 and the unloading station 5. A third transport conveyor 7.3 connects the unloading station 5 to the first loading station 3.1.

The loading stations 3 are provided for loading products P to product carriers 11. In the present embodiment, first products P1 are loaded to compartments 13 of the product carriers 11 at the first loading station 3.1 and second products P2 are loaded to compartments 13 of the product carriers 11 at the second loading station 3.1. This illustrates that the inventive conveyor system 1 is suitable to gather batches of products P of different product types P1, P2. However, it shall be noted, that the conveyor system 1 may only comprise a single loading station 3 and/or that products of the same type could be provided by multiple loading stations 3.

In the loading stations 3, the compartments 13 of the product carriers 11 are aligned with a respective loading position 15 of the loading station 3. Each loading station 3 comprises an infeed 17 which provides products P1, P2 to the respective loading position 15. Products P are therefore loaded to a respective compartment 13 of the product carrier 11 that is aligned with the loading position 15. In Fig. 1, a first product P1 is loaded into a first compartment 13.1 of a first product carrier 11.1 by a first infeed 17.1 of the first loading station 3.1. The first compartment 13.1 is aligned with a first loading position 15.1 of the first loading station 3.1.

The infeed 17 of the loading stations 3 transport products P in an infeed direction F. In the embodiment illustrated in Fig. 1, the product carriers 11 are moved through the loading stations 3 in a respective transport direction T. Here the transport directions T of the loading stations 3 are each substantially transverse to the respective infeed directions F. However, it shall be noted that in some embodiments, the infeed direction F and the transport direction T can be arranged at an angle, for example at 60°, 70° or 80° to each other.

As shown in Fig. 1, two first products P1 are loaded onto the product carriers 11 at the first loading station 3.1 and two second products P2 are loaded to the product carriers 11 at the second loading station 3.2. After all compartments 13 of a product carrier 11 have been filled with products P, the second transport conveyor 7.2 transports the filled product carrier 11 along the transport path 9 to the unloading station 5. At the unloading station 5, the products P are unloaded from the product carriers 11. In Fig. 1, the unloading station 5 comprises a robot 19 for unloading products P. It shall be noted that the unloading station 5 does not require a robot 19. For example, products could also be unloaded manually or product carriers 11 could be tilted for unloading products therefrom. The emptied product carriers 11 are then returned to the first loading station 3.1 of the conveyor system 1 by the third transport conveyor 7.3 along a return path 21.

In the embodiments illustrated in the Figs., the transport conveyors 7 are formed as endless chain conveyors 23. In conveyor systems 1 where the products P have to pass through bends and curves, an endless chain conveyor 23 is of advantage as endless chain conveyors 23 allow bends of their conveying tracks. A puck 25 of the product carrier 11 (see Fig. 2) can rest on the transport conveyor 7 during transport along the transport path 9 and/or the return path 21. Lateral supports can be provided which can prevent the pucks 25 of the product carriers 11 from sliding off of the transport conveyor 7. In other embodiments, conveying tracks of at least one of the transport conveyors 7 can be recessed in a trench with vertical side surfaces. The product carriers 11 resting on the endless chain conveyors 23 allow a simple construction. However, since the pucks 23 of the product carriers 11 only rest on the transport conveyors 7, the product carriers 11 may sometimes slide relative to the transport conveyors 7. The precision achievable with a standard conveyor are thus limited.

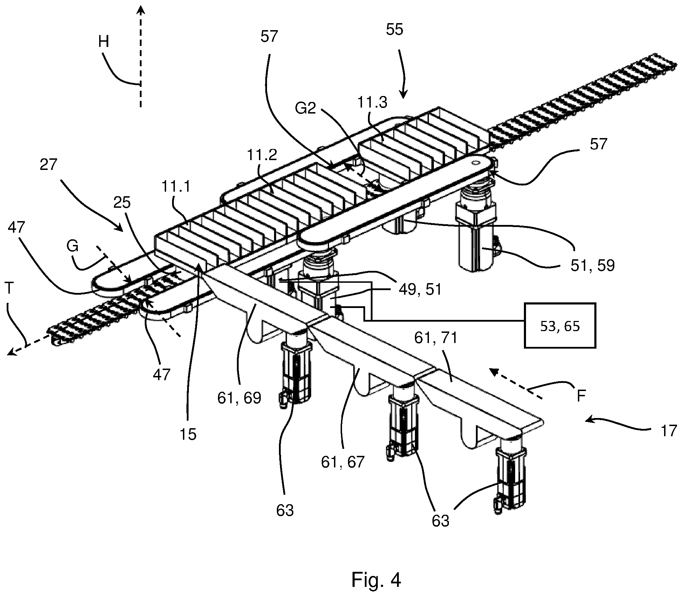

At the loading stations 3, the compartments 13 of the product carriers 11 are aligned with the respective loading positions 15 with high precision. For this purpose, the loading stations 3 each comprise a loading conveyor 27. The loading conveyor 27 is configured to transport the product carriers 11 stepwise through at least a portion of the respective loading station 3 and to align the compartments 13 of the product carriers 11 with the respective loading position 15. It shall be understood that the loading conveyor 27 can also be adapted to continuously move the product carriers 11 at least along a section of the loading station 3. A preferred embodiment of a loading station 3 and a loading conveyor 27 is described later with respect to Fig. 4.

Fig. 2 shows an exemplary embodiment of a product carrier 11. The product carrier comprises two pucks 25. The pucks 25 are space apart from each other. Providing two or more pucks 25 can prevent rotation of the product carrier 11 when the product carrier 11 is transported by the transport conveyors 7, a loading conveyor 27 of one of the loading stations 3 and/or at the unloading station 5. However, it shall be noted that product carriers 11 having only a single puck 25 or more than two pucks 25, in particular three or more, four or more, five or more, six or more, seven or more, eight or more, nine or more, ten or more pucks 25, are also preferred.

The pucks 25 of the product carrier 11 carry a product holder 29 of the product carrier 11. The product holder 29 is configured to hold products P during transport of the product carrier 11. As already described with regard to Fig. 1, the products P are loaded into the compartments 13. The compartments 13 are formed on the product holder 29. Here, the product holder 29 has seven compartments 13 for bar-shaped products P that are separated from each other by walls 31. The compartments 13 are arranged side by side and all have substantially identical dimensions. All compartments 13 are open at the top. However, it shall be noted, that compartments 13 of a preferred product holder 29 could also be closed compartments 13. Closed compartments 13 only have one opening (are open on one side) for receiving products P. Preferably, the product holder 29 could also have two or more different types of compartments 13. For example, a fist type of compartment 13 could have a larger width than a second type of compartment 13. Moreover, the product holder 29 could have less or more than seven compartments 13, preferably two or more compartments 13, three or more compartments 13, four or more compartments 13, five or more compartments 13, six or more compartments 13, eight or more compartments 13, nine or more compartments 13, ten or more compartments 13, eleven or more compartments 13, twelve or more compartments 13, thirteen or more compartments 13, fourteen or more compartments 13, fifteen or more compartments 13.

Preferably, the product holder 29 is releasably coupled to the pucks 25 (or a single puck 25 if the product carrier 11 comprises only one puck 25). A releasable coupling of the product holder 29 and the pucks 25 allows the pucks 25 to be reused when products P of a different size or shape and/or different numbers of products P have to be grouped together in batches. In such a case, a different product holder 29 adapted to the specific requirements could be mounted to the pucks 25. As described later with respect to Fig. 4, the loading conveyor 27 contacts the pucks 25 when it transports the product carrier 11 through the loading station 3. By exchanging only the product holder 29 but not the pucks 25, the conveyor system 1 can be easily adapted to changes of products P, batch sizes or product mixtures. However, it shall be noted that also conveyor systems 1 having product holders 29 fixed to one or more pucks 25 and/or a unitary construction of product holder 29 and puck 25 are already beneficial with regard to flexibility and complexity.

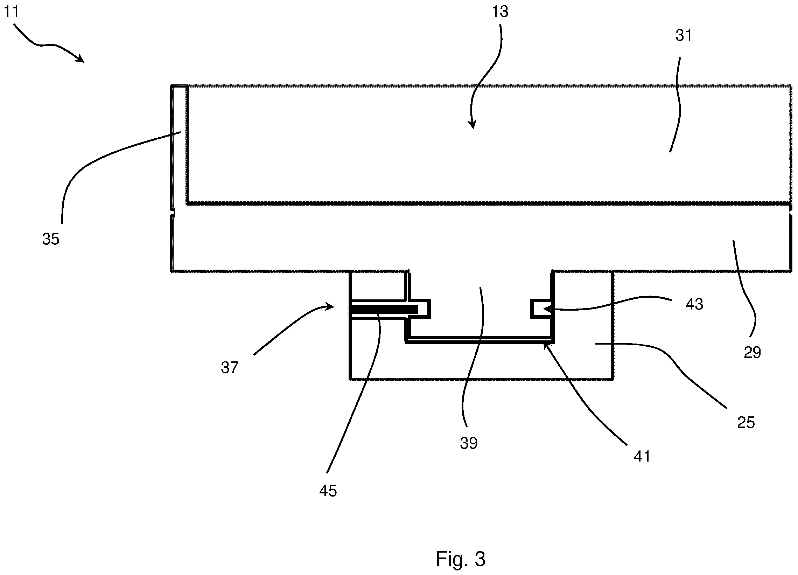

Fig. 3 shows a cut view through the product carrier 11 along plane A illustrated in Fig. 2. The shown compartment 13 of the product holder 29 is open at the top and at the right with respect to Fig. 3. Opposite a loading opening 33, the compartment 13 is closed by a back wall 35.

The product holder 29 and the puck 25 are connected to each other by a quick release mechanism 37. Preferably and as shown in Fig. 3, the product holder 29 comprises a pin 39 that is received in a corresponding recess 41 of the puck 25. In particularly preferred embodiments, a groove 43 is formed on pin 39. A release bolt 45 extends through the puck 25 and engages the groove 43 such that the product holder 29 and the puck 25 are fixed to each other. By removing release bolt 45, the quick release mechanism 37 is disengaged and the product holder 29 can be separated from the puck 25. However, it shall be understood, that other forms of quick release mechanisms 37 such as bayonet mechanisms, snap fits or the like are also preferred. Alternatively or additionally, the puck(s) 25 and the product holder 29 could also be connected by threads. For example, the recess 41 of puck 25 could comprise an internal thread such that puck 25 can be screwed onto an external thread formed on pin 39 of product holder 29.

Fig. 4 illustrates a loading station 3 of the conveyor system 1 in more detail. In the shown embodiment of the conveyor system 1, the endless chain conveyor 23 forming the transport conveyor 7 extends through the loading station 3. For illustrative purposes, only the chain of the endless chain conveyor 23 is shown in Fig. 4. However, it shall be noted that the endless chain conveyor 23 may comprise one or motors, rollers, pinions, railings and the like.

In other embodiments, the transport conveyor 7 may only extend from the loading station 3 and/or to the loading station 3. At least along a part of the loading station 3, the product carriers 11 are transported in the transport direction T by the loading conveyor 27. A relative motion between the pucks 25 of the product carrier 11 and the transport conveyor 7 extending through the loading station 3 is therefore possible in the loading station 3.

The loading conveyor 27 conveys the product carriers 11 past the infeed 17 and aligns respective compartments 13 of the product carrier 11 with the loading position 15. During operation, the loading conveyor 27 moves the product carrier 11 in the transport direction T until a compartment 13 to be filled with a product P is aligned with the loading position 15. Once the compartment 13 is aligned with the loading position 15, the loading conveyor 27 stops the product carrier 11 and a product P is filled into the compartment 13 by the infeed 17. After the compartment 13 has received the product P, the loading conveyor 27 moves the product carrier 11 in the transport direction T to either align another compartment 13 of the product carrier 11 with the loading position 15 or to eject the product carrier 11 for further transport towards the unloading station 5. It is also possible that a product P is filled into a moving compartment 13 in other embodiments. The loading position P can then be defined as a predefined length along the transport direction T.

The loading conveyor 27 comprises a pair of primary transport belts 47. In the preferred embodiment shown in Fig. 4, each primary transport belt 47 of the pair of primary transport belts 47 extends along the transport direction T. Preferably, the primary transport belts 47 extend horizontally along the transport direction T in the intended set up of the loading station 3.

The primary transport belts 47 extend parallel to each other and are spaced apart from each other such that they define a transport gap G. In the exemplary embodiment and preferably, the transport gap G is defined perpendicular to the transport direction T. The transport gap G is defined between the flat surfaces of the primary transport belts 47 facing each other.

A width of the transport gap G is chosen such that it substantially matches a diameter of the pucks 25 of the product carrier 11. In some embodiments, the transport gap G may be slightly smaller than a corresponding dimension of the pucks 25. The primary transport belts 47 are configured to clamp the pucks 25 of the product carrier 11 between each other. The loading conveyor 27 can then transport the product carrier 11 clamped between the primary transport belts 47 by driving the primary transport belts 47. Preferably, the primary transport belts 47 are at least partially formed from a high friction and/or sticky material. This can further reduce the risk of relative motions between the puck 25 and the primary transport belts 47. For example, the primary transport belts 47 can be formed from a rubber material. Additionally or alternatively, the primary transport belts 47 can be formed as toothed belts.

In the preferred embodiment shown in Fig. 4, the primary transport belts 47 each comprise a primary drive 49. Here, the primary drives 49 are formed as servo motors 51. Servo motors 51 can be controlled precisely and have a very quick response such that compartments 13 of the product carrier 11 can be aligned with the loading position 15 precisely and quickly with the loading conveyor 27. The conveyor system 1 can further comprise a controller 53, in particular a computer, microcontroller, server or the like, for controlling the primary drives 49. In particular, such a controller 53 can be configured to control the primary drives 49 of both primary transport belts 47 uniformly.

In other embodiments, only a single primary drive 49 can be provided for driving both primary transport belts 47. For example, such a single primary drive 49 can be connected to the primary transport belts 47 via one or more gears. However, such a gear increases the driven mass and therefore limits cycle rates that can be achieved. It is therefore preferred, that each primary transport belt 47 is individually driven or that the loading conveyor comprises an individual primary drive 49 for each primary transport belt 47 respectively.

Three product carriers 11 each having seven compartments 13 are shown in the loading station 3 of Fig. 4. A first product carrier 11.1 and a second product carrier 11.2 are both engaged by the loading conveyor 27. The pucks 25 of the first product carrier 11.1 and the second product carrier 11.2 are clamped between the pair of primary transport belts 47 of the loading conveyor 27. The pair of primary transport belts 47 of the loading conveyor 27 moves the first product carrier 11.1 and the second product carrier 11.2 simultaneously in the transport direction T.

In the embodiment shown in Fig. 4, the loading station 3 further comprises a supply conveyor 55. The supply conveyor 55 supplies product carriers 11 to the loading conveyor 27. In the example embodiment, the supply conveyor 55 has a similar design to the loading conveyor 27. It comprises a pair of secondary transport belts 57. The secondary transport belts 57 extend in the transport direction T and are spaced apart from each other by a secondary transport gap G2. The secondary transport gap G2 is defined between faces of the secondary transport belts 57 facing each other and perpendicular to the transport direction T.

In Fig. 4, a width of the secondary transport gap G2 is larger than a width of the transport gap G1. Here the secondary transport belts 57 do not clamp the pucks 25 of the product carriers 11 but the product holder 29 of the respective product carrier 11. However, in other embodiments, the secondary transport belts 57 of the supply conveyor 55 can also be configured to clamp one or more puck 25 of the product carrier 11 for conveying the product carrier 11 in the transport direction T. The secondary transport gap G2 and the transport gap G1 can then be of equal width. However, different widths of the transport gap G1 and the secondary transport gap G2 are also possible if both the loading conveyor 27 as well as the supply conveyor 55 clamp one or more pucks 25 of the product carrier 11. For example, the puck 25 can have different diameters along the height direction H.

Each of the secondary transport belts 57 is provided with a secondary drive 59. Preferably, the secondary drives 59 are also servo motors 51. In the preferred embodiment, the servo motors 51 are also controlled by the controller 53 but signal lines have been omitted in Fig. 4. In other embodiments, the conveyor system 1 could also comprise a second controller for controlling the supply conveyor 55.

Preferably, the controller 53 of the conveyor system 1 is configured to control the supply conveyor 55 such that a continuous stream of product carriers 11 is provided to the loading conveyor 27. In other words, the controller 53 can be configured to control the supply conveyor 55 such that at least two product carriers 11 engaged by the loading conveyor 27 abut each other in the transport direction T. This enables high filling rates of the loading station 3. Moreover, control of the loading conveyor 27 may be facilitated.

The third product carrier 11.3 shown in Fig. 4 is only engaged by the supply conveyor 55. When the first and second product carrier 11.1, 11.2 have advanced in the transport direction T by a certain amount, the controller 53 operates the secondary drives 59 such that the secondary transport belts 57 move the third product carrier 11.3 into engagement with the loading conveyor 27 and into contact with the second product carrier 11.2.

To facilitate transfer of product carriers 11 from the supply conveyor 55 to the loading conveyor 27, the secondary transport belts 57 of the preferred embodiment of a loading station 3 shown in Fig. 4 overlap the primary transport belts 47 in the transport direction T. A product carrier 11 can then be engaged by the primary transport belts 47 and the secondary transport belts 57 at the same time (but must not). Preferably, the secondary transport belts 57 extend above the primary transport belts 47 in the height direction H defined transverse to the transport direction T and parallel to the surfaces of the belts 47, 57. The secondary transport belts 47 are therefore arranged on a product holder side of the primary transport belts 47. The product holder side of the primary transport belts 47 being the side of the primary transport belts 47 oriented towards the product holder 29 of the product carrier 11. In other embodiments, the secondary transport belts could extend below the primary transport belts 47 or could not overlap the primary transport belts 47 at all.

Fig. 4 further illustrates a preferred configuration of the infeed 17. Here, the infeed 17 comprises three infeed belts 61 that are each individually driven by a respective infeed drive 63. Preferably, the infeed drives 63 are also servo motors 51. Driving each of the infeed belts 61 independently, can increase filling rates achievable by the loading station 3 and/or can help to ensure that each compartment 13 of the product carrier 11 is filled.

In the preferred configuration shown in Fig. 4, the infeed belts 61 or their infeed drives 63 respectively are controlled by an infeed controller 65. As shown in Fig. 4, the controller 53 can form the infeed controller 65. However, in other embodiments, an infeed controller 65 separate from a controller 53 of the loading conveyor 27 could be provided. During operation of the loading station 3, the infeed controller 65 is configured to control the infeed drives 63 such that a continuous line of products P is formed on a supply infeed belt 67 of the infeed belts 61. The supply infeed belt 67 is upstream of a loading infeed belt 69 in the infeed direction F. A buffer infeed belt 71 is arranged upstream of the supply infeed belt 67. For example, the buffer infeed belt 71 can receive products P from a primary packaging machine (not shown). The buffer infeed belt 71 moves products P in the infeed direction F. The infeed controller 65 controls the buffer infeed belt 71 and the supply infeed belt 67 such that a continuous line of products P is formed on the supply infeed belt 67. A continuous line of products P comprises at least one line of products abutting each other in the infeed direction F and/or being arranged to each other in the infeed direction with a gap smaller than 5 cm, preferably smaller 4 cm, preferably smaller 3 cm, preferably smaller 2cm, preferably smaller 1 cm. By forming a continuous line of products P on the supply infeed belt 67, a steady stream of products can be provided to the loading infeed belt 69. The loading infeed belt 69 is configured to receive single products P from the supply infeed belt 67 and to advance a received product P towards the loading position 15 for loading the respective product P into a compartment 13 of a product carrier 11 aligned with the loading position 25. In other words, the loading infeed belt 69 can be configured to "shoot" products P into a compartment 13 of a product carrier 11 aligned with the loading position 15. Although an infeed 17 having three infeed belts 61 is illustrated in Fig. 4, it shall be understood that the infeed 17 can be formed differently. For example, the infeed 17 could comprise only a single infeed belt 61 in other embodiments.

### List of reference signs

- 1: conveyor system
- 3: loading station(s)
- 3.1: first loading station
- 3.2: second loading station
- 5: unloading station
- 7: transport conveyor(s)
- 7.1: first transport conveyor
- 7.2: second transport conveyor
- 7.3: third transport conveyor
- 9: transport path
- 11: product carrier(s)
- 11.1: first product carrier
- 11.2: second product carrier
- 11.3: third product carrier
- 13: compartment(s)
- 13.1: first compartment
- 15: loading position(s)
- 15.1: first loading position
- 17: infeed
- 17.1: first infeed
- 19: robot
- 21: return path
- 23: endless chain conveyor(s)
- 25: puck
- 27: loading conveyor
- 29: product holder
- 31: wall(s)
- 33: loading opening
- 35: back wall
- 37: quick release mechanism
- 39: pin
- 41: recess
- 43: groove
- 45: release bolt
- 47: primary transport belt(s)
- 49: primary drive(s)
- 51: servo motor(s)
- 53: controller
- 55: supply conveyor
- 57: secondary transport belt(s)
- 59: secondary drive(s)
- 61: infeed belt(s)
- 63: infeed drive(s)
- 65: infeed controller
- 67: supply infeed belt
- 69: loading infeed belt
- 71: buffer infeed belt
- A: plane
- F: infeed direction
- G: transport gap
- G2: secondary transport gap
- P: product(s)
- P1: first product
- P2: second product
- T: transport direction

## Claims

1. A conveyor system (1) comprising
at least one product carrier (11) including
at least one puck (25) and a product holder (29), the product holder having a plurality of compartments (13),
at least one loading station (3) for loading products (P) to the product carrier (11),
at least one unloading station (5) for unloading products (P) from the product carrier (11),
at least one transport conveyor (7) configured to transport the product carrier (11) at least along a section of a transport path (9) between the loading station (3) and the unloading station (5) and/or of a return path (21) between the unloading station (5) and the loading station (3),
wherein the loading station (3) comprises
an infeed (17) configured to receive products (P) and to deliver the products (P) to a loading position (15) of the loading station (3),
a loading conveyor (27) configured to transport the product carrier (11) stepwise in a transport direction (T) through the loading station (3) and to successively align the compartments (13) of the product carrier (11) with the loading position (15),
wherein the loading conveyor (27) comprises a pair of primary transport belts (47) defining a transport gap (G) between each other, and wherein the primary transport belts (47) are configured to clamp the at least one puck (25) of the product carrier (11) in the transport gap (G) for conveying the product carrier (11) in the transport direction (T).

2. The conveyor system (1) of claim 1, wherein the primary transport belts (47) extend parallel to each other along the transport direction (T) and are configured to clamp the at least one puck (25) laterally.

3. The conveyor system (1) of claim 1 or 2, wherein the loading station (3) further comprises a supply conveyor (55) configured to provide the product carrier (11) to the loading conveyor (27).

4. The conveyor system (1) of claim 3, wherein the supply conveyor (55) comprises a pair of secondary transport belts (57) defining a secondary transport gap (G2) between each other, and wherein the secondary transport belts (57) are configured to clamp the at least product carrier (11) in the secondary transport gap for conveying the product carrier (11) in the transport direction (T).

5. The conveyor system (1) of claim 4, wherein the secondary transport belts (57) at least partially overlap the primary transport belts (47) in the transport direction (T).

6. The conveyor system (1) of claim 4 or 5, wherein the secondary transport belts (57) are arranged on a product holder side of the primary transport belts (47) in a height direction (H) transverse to the transport direction (T).

7. The conveyor system (1) of any of claims 1 to 6, wherein the transport conveyor (7) extends through the loading station (3) and/or the unloading station (3).

8. The conveyor system (1) of any of claims 1 to 7, wherein the primary transport belts (47) have at least one servo motor (51).

9. The conveyor system (1) of any of claims 1 to 8, wherein the at least one puck (25) has at least one flat clamping surface, preferably two parallel flat clamping surfaces, and/or wherein the puck (25) has a cylindrical clamping surface..

10. The conveyor system (1) of any of claims 1 to 9, wherein the at least one puck (25) is at least partially formed by a sandwich construction having an inner honeycomb structure.

11. The conveyor system (1) of any of claims 1 to 10, wherein the product holder (29) is releasably coupled to the at least one puck (25).

12. The conveyor system (1) of any of claims 1 to 11, wherein the puck (25) and/or the product holder (29) is at least partially made from a biodegradable material and/or by additive manufacturing.

13. The conveyor system (1) of any of claims 1 to 12, wherein the infeed (17) comprises at least two infeed belts (61), preferably three infeed belts (61), wherein the infeed belts (61) are arranged in series and individually drivable.

14. The conveyor system (1) of claim 13, further comprising an infeed controller (65), wherein the infeed controller (65) is configured to control the infeed belts (61) such that a continuous line of products (P) is formed on a supply infeed belt (67) and such that a loading infeed belt (69) arranged between the supply infeed belt (67) and the loading position (15) individually conveys products (P) to a compartment (13) of the product holder (29) aligned with the loading position (15).

15. The conveyor system (1) of any of claims 1 to 14, wherein the product carrier (11) comprises at least two pucks (25) spaced apart from each other in the transport direction (T).
